(19) Europäisches Patentamt
European Patent Office
Office européen des brevets

(11) EP 2 300 883 B1

(12) FASCICULE DE BREVET EUROPEEN

(45) Date de publication et mention de la délivrance du brevet:
23.12.2015 Bulletin 2015/52

(51) Int Cl.:
G05B 15/02 (2006.01)　　　G06F 3/01 (2006.01)

(21) Numéro de dépôt: 09754067.8

(22) Date de dépôt: 28.05.2009

(86) Numéro de dépôt international:
PCT/FR2009/000623

(87) Numéro de publication internationale:
WO 2009/144417 (03.12.2009 Gazette 2009/49)

(54) **SYSTEME ET PROCEDE DE COMMANDE D'UNE MACHINE PAR DES SIGNAUX CORTICAUX**

SYSTEM UND VERFAHREN ZUM STEUERN EINER MASCHINE DURCH KORTIKALE SIGNALE

SYSTEM AND METHOD FOR CONTROLLING A MACHINE BY CORTICAL SIGNALS

(84) Etats contractants désignés:
AT BE BG CH CY CZ DE DK EE ES FI FR GB GR HR HU IE IS IT LI LT LU LV MC MK MT NL NO PL PT RO SE SI SK TR

(30) Priorité: 29.05.2008 FR 0802958

(43) Date de publication de la demande:
30.03.2011 Bulletin 2011/13

(73) Titulaire: **Commissariat à l'Énergie Atomique et aux Énergies Alternatives**
**75015 Paris (FR)**

(72) Inventeur: **BENABID, Alim-Louis**
**38240 Meylan (FR)**

(74) Mandataire: **Le Goaller, Christophe**
**Invent'IP**
**31, rue Gustave Eiffel**
**38000 Grenoble (FR)**

(56) Documents cités:
**US-A1- 2004 267 320**

## Description

L'invention porte sur un système et un procédé de commande d'une machine par des signaux corticaux.

Les interfaces neuronales directes, permettant de commander un dispositif externe à partir de la détection de signaux électrophysiologiques issus du cortex cérébral d'un sujet humain ou animal, sont étudiées depuis les années soixante-dix. A l'état actuel, il est possible d'entraîner des patients, ou des animaux de laboratoire, à commander « par la pensée » des dispositifs simples, par exemple à déplacer un curseur sur un écran. En 2006, un patient tétraplégique a pu, par l'intermédiaire d'une interface neuronale directe, utiliser un ordinateur et un téléviseur, ouvrir et fermer une prothèse de main et même faire effectuer des mouvements simples à un bras robotique. Voir à ce sujet l'article de Leigh R. Hochberg et al. « Neuronal ensemble control of prosthetic devices by a human with tetraplegia », Nature 442, 164-171 (13 July 2006) et également la demande de brevet US 2004/0267320 A1.

De tels systèmes neuroélectroniques pourraient, dans un avenir relativement proche, améliorer sensiblement les conditions de vie des personnes paralysées, en leur restituant une certaine autonomie. Dans un futur plus éloigné, ils pourraient également être utilisés pour accroître les facultés de sujets sains (commande « mains libres » de dispositifs divers, etc.).

Jusqu'à présent, les meilleurs résultats dans ce domaine ont été obtenus à l'aide de systèmes de type invasif, utilisant pour l'acquisition des signaux électrophysiologiques des électrodes pénétrant à l'intérieur du cortex cérébral (voir l'article précité de Leigh R. Hochberg et al.). Des systèmes non invasifs, utilisant des signaux électroencéphalographiques prélevés à travers le scalp du sujet, ont également été proposés. Ces systèmes sont cependant d'utilisation plus difficile et nécessitent d'un entrainement intense du sujet ; en outre, leurs performances sont peu satisfaisantes en raison, notamment, de la faible résolution spatiale des électrodes électroencéphalographiques. L'utilisation d'électrodes électrocorticographiques, implantées à l'intérieur du crâne, mais ne pénétrant pas le cortex, semble constituer une voie moyenne prometteuse.

Des interfaces neuronales directes utilisant des signaux électrocorticographiques sont décrites en particulier par les articles suivants :

- Felton E. A., Wilson J. A., Williams J. C. et Garell P. C. « Electrocorticographically controlled brain-computer interfaces using motor and sensory imagery in patients with temporary subdural electrode implants. Report of four cases », J. Neurosurg. 106 (2006), 495-500
- Schalk G., Kubanek J., Miller K. J., Anderson N. R., Leuthardt E. C., Ojemann J. G., Limbrick D., Moran D. W., Gerhardt L. A. et Wolpaw J. R. « Decoding two-dimensional movement trajectories using electrocorticographic signals in humans » J. Neural. Eng. 4 (2007), 264-75.

Ces deux articles décrivent des expériences effectuées sur des patients épileptiques auxquels des électrodes electrocorticographiques avaient été implantées temporairement pour des raisons médicales.

Dans les deux cas, des signaux électrocorticographiques ont été acquis et analysés alors que les patients effectuaient des mouvements des bras, de la langue, des yeux, etc., imaginaient simplement ces mouvements, ou encore évoquaient des images ou des sons auxquels ils avaient préalablement été exposés. Des caractéristiques spectrales des signaux issus de certaines zones du cerveau ont été identifiées comme étant susceptibles d'être utilisées pour la commande d'un dispositif (le mouvement d'un curseur sur un écran). Ensuite, les sujets ont été entraînés à commander effectivement le dispositif « par la pensée », en exploitant les caractéristiques des signaux électrophysiologiques identifiées lors de la phase d'analyse. En d'autres termes, les patients ont appris à moduler des amplitudes spectrales des signaux issus de certaines régions de leur cortex en effectuant ou en imaginant effectuer des actions simples, ou bien en évoquant certains stimuli sensoriels.

Ainsi, par exemple, un sujet a été entraîné à commander les mouvements verticaux et horizontaux d'un curseur en imaginant bouger la langue et la main droite, respectivement. Les signaux de commande horizontale du curseur étaient générés à partir des variations d'amplitude du signal électrophysiologique issu de la région de Brodmann n°43 de l'hémisphère cérébral gauche dans les bandes de fréquence 90 - 95 Hz et 110 - 115 Hz. Pour la génération du signal de commande horizontale, une combinaison linéaire de signaux issus de plusieurs régions de Brodmann et de plusieurs bandes de fréquence était exploitée (signal issu de la région n° 2 dans la bande à 90 - 95 Hz ; signal issu de la région n°3 dans la bande à 85 - 90 Hz ; signal issu de la région n°6 dans les bandes à 115 - 120 Hz et à 125 - 130 Hz).

Une des principales difficultés rencontrées pour la mise en oeuvre de cette méthode réside dans le fait que chaque action, effectuée ou imaginée, ou chaque stimulus sensoriel, réellement perçu ou seulement évoqué, active simultanément une pluralité de région corticales, et induit des variations des signaux électrophysiologiques issus de ces régions dans plusieurs plages de fréquence. Pour actionner de manière fiable N degrés de liberté d'une machine il faut donc identifier au moins autant de caractéristiques de signaux corticaux, issus de diverses régions du cortex, dont les variations induites sont sensiblement non-corrélées entre elles. En pratique, il est très difficile d'identifier plus de deux ou trois caractéristiques ou combinaisons de caractéristiques satisfaisant à cette condition.

Pour cette raison, la possibilité de commander plus de deux ou trois degrés de libertés au moyen de signaux électrocorticographiques n'a pas été rapportée à ce jour.

L'utilisation d'électrodes intracorticales permet de commander un plus grand nombre de degrés de libertés, mais au prix d'une invasivité beaucoup plus importante.

En tout cas, on est loin des 10 - 20 degrés de liberté qui seraient nécessaires pour rendre à un patient tétraplégique une véritable autonomie, en pilotant un système d'effecteurs tel qu'un robot complexe voire un exosquelette lui permettant d'effectuer des mouvements corporels.

L'invention propose de surmonter cette limitation en utilisant, pour la génération des signaux de commande, des variations de caractéristiques de signaux électrophysiologiques issus de régions du cortex qui sont déterminées a priori, sans être associées à des actions effectuées ou imaginées, ni à des stimuli sensoriels évoqués par ledit sujet humain ou animal.

L'idée à la base de l'invention consiste à exploiter la plasticité du cortex cérébral qui peut apprendre à moduler, de manière directe, les signaux électrocorticographiques. Il s'agit là d'un changement radical d'approche. En effet, dans l'art antérieur les modulations des signaux électrocorticographiques sont produites de manière indirecte, et constituent d'une certaine façon un effet collatéral d'un acte psychique sans rapport direct avec la commande d'une machine. Au contraire, conformément à l'invention le cerveau du sujet peut apprendre à activer de manière volontaire diverses régions de son cortex pour générer des signaux qui sont directement orientés à la commande d'une machine.

Cette nouvelle approche est avantageuse car elle permet de mieux exploiter les potentialités du cortex cérébral. Plus de caractéristiques décorrélées peuvent ainsi être identifiées, ce qui rend possible la commande simultanée d'un plus grand nombre de degrés de libertés.

Dans un premier mode de réalisation de l'invention, seule l'association entre signaux de commande et régions du cortex est arbitraire, tandis que les variations de caractéristiques du signal (amplitude, bande de fréquences) les mieux adaptées au pilotage de l'actionneur sont identifiées lors d'une phase dite d'apprentissage. Le mot « apprentissage » doit être compris ici dans le sens où c'est le système qui « apprend » à identifier les signaux émis volontairement par les différentes régions du cortex du sujet.

Dans un deuxième mode de réalisation de l'invention, les caractéristiques « cibles » des signaux électrocorticographiques sont également déterminées a priori, et associées de manière arbitraire à des signaux de commande. Ce mode de réalisation permet de commander un nombre encore plus élevé de degrés de liberté ; mais on demande au sujet un effort d'apprentissage plus intense. Ici, ce n'est pas le système qui « apprend » à reconnaître les signaux générés par l'individu : c'est ce dernier qui doit apprendre à générer de manière volontaire les signaux attendus, en utilisant les régions corticales prévues à cet effet. On comprend que la mise en oeuvre de ce deuxième mode de réalisation est sensiblement plus délicate.

Le système et le procédé de l'invention conviennent particulièrement pour la commande d'effecteurs tels que servomoteurs, robots ou exosquelettes, surtout lorsque plusieurs degrés de liberté doivent être actionnés de manière indépendante. Cependant, l'invention permet également de commander des machines de traitement de l'information, tels que des ordinateurs, par exemple pour lancer et piloter l'exécution de programmes.

Un objet de l'invention qui n'est pas revendiqué est donc un système de commande d'une machine par des signaux corticaux, comprenant : un moyen d'acquisition de signaux électrophysiologiques issus d'une pluralité de localisations du cortex du cerveau d'un sujet humain ou animal ; et un moyen d'élaboration, adapté pour recevoir en entrée lesdits signaux électrophysiologiques, et pour générer en sortie des signaux de commande de ladite machine en réponse à des variations prédéterminées de caractéristiques desdits signaux électrophysiologiques ; caractérisé en ce qu'au moins certains desdits signaux électrophysiologiques sont issus de régions du cortex déterminées a priori, sans être associées à des actions effectuées ou imaginées, ni à des stimuli sensoriels évoqués par ledit sujet humain ou animal.

Selon des modes de réalisation particuliers:

- Ledit moyen d'élaboration peut être adapté pour exploiter des signaux issus de régions distribuées d'une manière approximativement uniforme sur une portion substantielle de la surface dudit cortex (de quelques centimètres carrés à quelques dizaines, voire centaines, de centimètres carrés).
- Ledit moyen d'élaboration peut être adapté pour générer lesdits signaux de commande à partir de variations de caractéristiques déterminées a priori desdits signaux électrophysiologiques
- Ladite machine peut être choisie parmi : un robot, un exosquelette, un ordinateur exécutant un ou plusieurs logiciels ;
- Ledit moyen d'acquisition de signaux électrophysiologiques peut être choisi parmi : un réseau d'électrodes électrocorticographiques implantables ; et un réseau d'électrodes électroencéphalographiques susceptibles d'être placé sur le scalp du sujet.

Un autre objet de l'invention est un procédé de commande d'une machine par des signaux corticaux, comprenant les étapes consistant à : acquérir une pluralité de signaux électrophysiologiques issus de différentes localisations du cortex du cerveau d'un sujet humain ou animal ; détecter des variations prédéterminées de certaines caractéristiques desdits signaux électrophysiologiques ; et en réponse auxdites variations, générer des signaux de commande de ladite machine ; caractérisé en ce qu'au moins certaines desdites variations prédéterminées de caractéristiques des signaux électrophysiologiques sont issus de régions du cortex déterminées a priori, sans être associées à des actions effectuées ou imaginées, ni à des stimuli sensoriels évoqués par ledit sujet humain ou animal.

Le procédé peut comporter également une étape préliminaire d'entraînement dudit individu, comportant les sous-étapes consistant à : choisir une ou plusieurs localisations du cortex et les associer, provisoirement, de manière arbitraire, à un signal de commande de ladite machine ; entraîner le cerveau dudit sujet à activer volontairement lesdites régions du cortex pour provoquer des variations de caractéristiques des signaux électrophysiologiques issus de ces dernières, de manière à commander ladite machine d'une manière souhaitée ; en fonction de l'échec ou du succès de cet entraînement, valider ou refuser l'association provisoire entre variations de caractéristiques et signal de commande ; lesdites sous-étapes étant répétées, en changeant à chaque fois les associations entre régions du cortex et signaux de commande jusqu'à ce qu'un nombre suffisant desdites associations ait été validé.

Selon un mode de réalisation de l'invention, ladite étape préliminaire d'entraînement peut comporter également une sous-étape consistant à entraîner le cerveau dudit sujet à provoquer des variations de caractéristiques déterminées a priori des signaux électrophysiologiques issus desdites régions du cortex ; les sous-étapes d'entraînement étant répétées en changeant à chaque fois les associations entre caractéristiques des signaux électrophysiologiques et signaux de commande jusqu'à ce qu'un nombre suffisant desdites associations ait été validé.

Selon un mode de réalisation alternatif, le procédé peut comporter également une étape préliminaire d'identification de caractéristiques des signaux électrophysiologiques issus desdites régions corticales susceptibles d'être utilisées pour la génération desdits signaux de commande.

Avantageusement, lors de ladite étape d'entraînement, une information de retour représentative des variations de caractéristiques peut être fournie au sujet. Plus particulièrement, ladite information de retour peut comporter au moins une information parmi : une information indirecte, indicative du signal de commande reçu par la machine ; et une information directe, indicative des caractéristiques des signaux électrophysiologiques utilisées pour la commande.

Lesdits signaux électrophysiologiques peuvent notamment être choisis parmi : des signaux électrocorticographiques, acquis via un réseau d'électrodes implantées ; et des signaux électroencéphalographiques, acquis via un réseau d'électrodes placé sur le scalp du sujet.

D'autres caractéristiques, détails et avantages de l'invention ressortiront à la lecture de la description faite en référence aux dessins annexés donnés à titre d'exemple et qui représentent, respectivement :

- la figure 1, un schéma de principe d'un système de commande selon l'invention ;
- la figure 2, le spectre d'un signal cortical susceptible d'être exploité par le système de la figure 1.

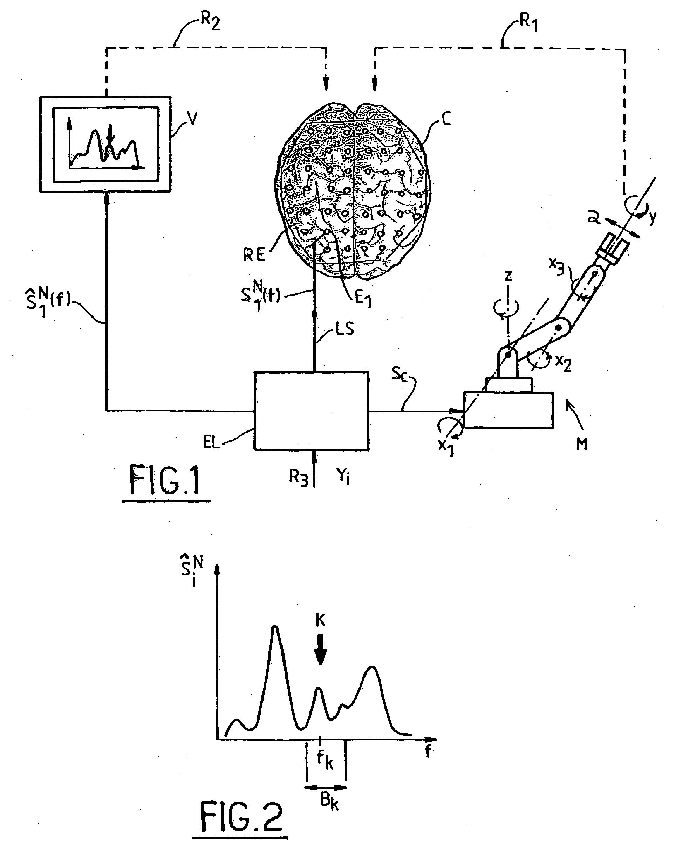

La figure 1 représente un cerveau humain C sur lequel est disposé un réseau d'électrodes électrocorticographiques RE, reliées à un moyen d'élaboration EL par l'intermédiaire d'une liaison de signal LS qui peut être filaire ou, de préférence, sans fil.

Pour des raisons de clarté, la figure représente une seule liaison de signal LS qui transmet au moyen d'élaboration EL le signal $s_1^N(t)$ issu d'une électrode $E_1$. L'exposant N indique qu'il s'agit d'un signal neurophysiologique, alors que l'indice correspond à l'électrode dont le signal est issu. En réalité, toutes les électrodes (ou, de moins, une fraction importante d'entre elles) sont reliés au moyen d'élaboration EL. Pour acquérir un nombre suffisamment important de signaux électrophysiologiques, le réseau d'électrodes RE doit couvrir une fraction substantielle de la convexité du cortex du cerveau C.

Le moyen d'élaboration EL traite les signaux électrophysiologiques $s_i^N(t)$ issus des électrodes $E_i$ pour générer des signaux $S_c$ de commande d'une machine M. Dans le cas de la figure, cette machine est un bras robotique à 6 degrés de liberté (rotation autour des axes $x_1$, $x_2$, $x_3$, $y$ et $z$, écartement a de la pince faisant office de main).

La commande de la machine se fait en boucle fermée : cela signifie que le sujet utilisant le système (et donc son cerveau C) reçoit des informations de retour. Ces informations peuvent comprendre notamment des informations indicatives des signaux de commande reçus par la machine : cela se fait très naturellement par une voie sensorielle, en permettant à l'individu d'observer le mouvement de la machine M (éventuellement, un retour tactile et/ou auditif peut également être envisagé, notamment si le sujet présente un déficit sensoriel). Cette voie de retour est représentée sur la figure par la boucle de rétroaction $R_1$.

Il est également possible de fournir au sujet une information de retour directe, indicative des caractéristiques des signaux électrophysiologiques qui sont utilisées pour la commande. Pour ce faire, le système de la figure 1 comporte un écran V relié au moyen d'élaboration pour afficher un graphique du spectre $\hat{S}_1^N(f)$ du signal électrophysiologique $s_1^N(t)$. Cette deuxième voie de retour (boucle de rétroaction $R_2$) est particulièrement utile en phase d'apprentissage, comme cela sera détaillé par la suite.

La figure 2 représente plus en détail le spectre $\hat{S}_1^N(f)$ du signal $s_1^N(t)$ issu de l'électrode $E_1$. La caractéristique K, mise en évidence par une flèche, qui est utilisée pour la commande est, dans ce cas, l'amplitude spectrale de ce signal dans la bande $B_k$ centrée autour de la fréquence $f_k$. Les variations de cette caractéristique sont associées, éventuellement d'une manière arbitraire, à l'actionnement d'un des six degrés de libertés de la machine M. En variante, les caractéristiques combinées d'un signal ou de plusieurs signaux peuvent être utilisées pour l'actionnement d'un même degré de liberté.

Comme cela a été évoqué plus haut, les signaux électrophysiologiques $s_i^N(t)$ sont acquis de préférence à l'aide d'une ou plusieurs matrices d'électrodes corticales. Ces électrodes sont reliées à un dispositif de prétraitement par liaison filaire. Ce dispositif de prétraitement génère un signal exploitable par un dispositif de post-traitement, la liaison entre ledit dispositif de prétraitement et dispositif de post-traitement étant filaire ou de type transmission par ondes électromagnétiques. Le dispositif de post-traitement génère des signaux de commandes d'un ou plusieurs effecteurs, la liaison entre le dispositif de post-traitement et le ou les effecteurs étant de type filaire ou sans fils (transmission par ondes électromagnétiques).

Les électrodes peuvent être sous-durales ou extradurales, les premières présentant une meilleure résolution et une amplitude de signal plus élevée, mais une plus grande invasivité.

Des sondes comportant des matrices souples d'électrodes corticales pouvant convenir à la mise en oeuvre de l'invention sont disponibles dans le commerce, ayant été développées pour des applications thérapeutiques comme le traitement de l'épilepsie ou de la douleur. Voir par exemple l'article de C. M. Chin et al. « Identification of arm movements using correlation of electrocorticographic spectral components and kinematic recordings », J. Neural Eng. 4 (2007), 146-158, décrivant l'utilisation d'une sonde Medtronic 3586 pour l'enregistrement de signaux corticaux. Chaque matrice comprend typiquement entre 2 et 200 électrodes, le plus souvent disposées selon une grille à mailles carrées ou rectangulaires, l'espacement entre électrodes étant généralement de l'ordre de 1 cm. Des matrices ne contenant qu'une seule ligne d'électrodes peuvent également être utilisées.

Chaque électrode comprend un plot de contact, réalisé en utilisant un matériau conducteur biocompatible, par exemple du platine iridié (Pt 90 - Ir 10), le graphite, des nanotubes de Carbone, un oxyde métallique conducteur (par exemple l'oxyde d'indium et d'étain, connu sous le nom d'ITO), un alliage (par exemple MP35N), etc. La partie active comporte une surface comprise entre quelques centaines de $\mu m^2$ et 20 $mm^2$ environ. Le support sur lequel sont fixées les électrodes est avantageusement un support souple et isolant, de surface comprise entre quelques $cm^2$ à quelques centaines de $cm^2$, et d'une épaisseur comprise entre quelques centaines de $\mu m$ à quelques mm. Un tel support peut être réalisé dans un matériau souple et biocompatible tel qu'un polymère de type BCB (benzocyclobutène), un polyimide (par exemple Pi2611), un polyimide-isoindoro-quinazorindione (PIQ), un parylène, un élastomère de type silicone injectable (par exemple les références MED-4720 ou Q7-4720 commercialisées respectivement par les sociétés Nusil ou Dow Corning), mais également un polyuréthane ou polyvinyle chlorure.

Chaque électrode est reliée à sa propre voie de mesure pouvant être constituée d'un fil de métal, d'oxyde de métal conducteur tel que l'ITO, ou de graphite. Les voies de mesure peuvent également être constituées d'une piste métallique planaire réalisée par exemple par dépôt d'encre conductrice sur un substrat souple, ou encore par frittage (notamment laser) d'une nanopoudre. La voie de mesure est préférentiellement intégrée dans le matériau souple du support.

Chaque voie de mesure est connectée à au moins une électrode.

Le réseau d'électrodes peut être relié à une embase fixée sur le crâne du sujet instrumenté, cette embase étant destinée à recevoir un connecteur permettant une liaison avec le dispositif de prétraitement, situé dans ce cas à l'extérieur, par liaison filaire.

Le réseau d'électrodes peut également être connecté, par liaison filaire, par exemple une connectique haute densité, à un dispositif compact de prétraitement, implanté soit sous le crâne, soit sur le crâne.

De façon préférentielle, le dispositif de prétraitement effectue la préamplification du signal, son filtrage et son multiplexage, et la conversion analogique numérique. Selon un premier mode de réalisation, le dispositif de prétraitement peut être connecté au boîtier sur le crâne ou le scalp du sujet par une liaison filaire.

Selon un autre mode de réalisation, le dispositif de prétraitement peut être réalisé sous forme d'un ou plusieurs circuit(s) intégré(s) dédié(s) (ou « ASIC »), également intégré dans le boîtier implantable. Un tel dispositif de prétraitement sous forme d'un ASIC est décrit dans la publication de O. Billoint, J. P. Rostaing, G. Charvet et B. Yvert : « A 64-Channel ASIC for In-Vitro Simultaneous Recording and Stimulation of Neurons using Microelectrode Arrays », EMBS 2007, IEEE 29th Annual International Conference of the Engineering in Medicine and Biology Society, 2007.

Des moyens supplémentaires de traitement de l'information, permettant des opérations de traitement de signal telles qu'une amplification, un filtrage ou une classification, peuvent être également inclus dans ce dispositif de prétraitement. De tels moyens de traitement permettent notamment d'extraire des paramètres caractéristiques du signal mesuré. Dans le cas d'une implantation intracrânienne, on placera le dispositif dans un confinement de forme adaptée à l'anatomie et conçu avec des matériaux biocompatibles.

Le dispositif de prétraitement peut fonctionner avec une source d'énergie de type pile ou batterie, pouvant être rechargeable par une liaison filaire ou par téléalimentation ; de préférence il dispose d'un système de gestion de l'énergie.

Les informations issues du dispositif de prétraitement peuvent être transférées à un dispositif de post-traitement du signal, par liaison filaire ou par transmission sans fil, par exemple par ondes électromagnétiques.

Le dispositif de post-traitement du signal est constitué de moyens de traitement du signal connus de l'homme du métier, permettant l'amplification et l'analyse du signal transmis par le dispositif de prétraitement. Il peut notamment s'agir de moyens d'amplification, de filtrage, d'extraction de paramètres, ou de fonctions de corrélation avec d'autres signaux. Ce dispositif comprend également des moyens de commande d'un ou plusieurs effecteurs, par liaison filaire ou radio. Il peut être externe ou implanté, et comprend dans ce dernier cas une source d'énergie de type pile ou batterie rechargeable par liaison filaire ou télétransmission.

Selon un autre mode de réalisation, les dispositifs de prétraitement et de post-traitement sont inclus dans un même boîtier, pouvant être externe ou implanté. Il peut par exemple d'agir d'une association de plusieurs ASIC dédiés.

Selon un autre mode de réalisation, tout ou partie des dispositifs de prétraitement ou de post-traitement peuvent être externes durant une première phase, destinée par exemple à l'établissement des paramètres caractéristiques du signal, permettant une commande satisfaisante d'un ou plusieurs effecteurs. La totalité ou une partie de ces dispositifs peuvent également être externes durant la phase d'apprentissage, au cours de laquelle le sujet apprend à piloter les effecteurs. A l'issue de cette phase ces dispositifs, ou certains d'entre eux, peuvent être implantés.

Sur le schéma simplifié de la figure 1, le dispositif de prétraitement et celui de post traitement sont représentés conjointement par le moyen d'élaboration EL.

Le signal issu du module de prétraitement est reçu par le dispositif de traitement pour être amplifié, filtré par un filtre passe bas ou passe bande, typiquement dans la bande passante 0,1 - 500 Hz, puis échantillonné (fréquence comprise entre 500 Hz et quelques kHz), et numérisé.

Selon un premier mode de réalisation de l'invention, l'association entre régions du cortex et signaux de commande de la machine M se fait a priori, de manière arbitraire, mais les caractéristiques des signaux électrophysiologiques issus desdites régions corticales susceptibles d'être utilisées pour la génération desdits signaux de commande sont identifiées lors d'une étape préliminaire d'apprentissage.

Dans le cadre de cette étape préliminaire, l'unité d'élaboration EL reçoit en entrée un signal électrophysiologique $s_i$ (t), acquis par une électrode $E_i$, ainsi qu'un signal $Y_i(t)$ représentatif de l'actionnement du i-ème degré de liberté $M_i$ de la machine M (ou effecteur $M_i$). Dans le cas le plus simple, ce signal $Y_i$ est une variable fonction de l'intention de l'individu d'effectuer une action sensorielle ou motrice, pouvant être préférentiellement l'actionnement d'un effecteur $M_i$. Par exemple, cette variable peut être booléenne, prenant la valeur 1 lorsque le sujet imagine actionner le i-ème degré de liberté de la machine et la valeur 0 dans le cas contraire (entrée R3).

L'étape suivante consiste à établir un indicateur exprimant la dépendance d'une ou plusieurs caractéristiques du signal neurophysiologique ainsi mesuré vis-à-vis de la variable $Y_i$ indiquant l'intention de réaliser une action motrice ou sensorielle, par exemple l'actionnement de l'effecteur $M_i$. Les caractéristiques peuvent être choisies parmi l'amplitude ou la puissance dans une ou plusieurs bandes fréquentielles. Cette dépendance peut être déterminée par des méthodes connues de l'homme du métier, et décrites dans la littérature, par exemple dans les publications précitées de E. Felton et al et de G. Schalk et al., ainsi que dans G. Schalk et al. « Two dimensional movement control using electrocorticographic signals in humans », J. of Neural Engineering 5 (2008), 75 - 84.

Par exemple, si la caractéristique du signal si retenue est la puissance dans une ou plusieurs bandes fréquentielles, le signal électrophysiologique $s_i$ (t) peut être converti dans le domaine fréquentiel $\hat{S}_i$ (f), par une méthode non paramétrique, telle la transformée de Fourier ou par des techniques paramétriques, par exemple une autorégression. Le signal exprimé dans le domaine fréquentiel peut être décomposé en P bandes spectrale de largeur, par exemple, égale à 5 Hz : $\hat{S}_i(f_j)$ avec j=1 - P.

L'indicateur exprimant la dépendance de cette (ces) caractéristiques(s) vis-à-vis de la variable $Y_i$ peut, par exemple, être déterminé par un coefficient de corrélation r entre la puissance du signal $\hat{S}_i$ (f) dans chaque bande spectrale et le signal $Y_i$. Ce coefficient peut être calculé, par exemple, en appliquant la formule :

$$ r_j^i = \frac{\left\langle \left[ S_i(f_j) - \mu_S(f_j) \right] \cdot \left[ Y_i - \mu_Y^i \right] \right\rangle}{\sigma_S(f_j) \cdot \sigma_Y^i} \text{ ou:} $$

- ⟨...⟩ indique l'opération de moyenne temporelle ;
- $\mu_S(f_j)$ et $\sigma_S(f_j)$ sont, respectivement, la moyenne et l'écart-type de $\hat{S}_i^N(f_j)$
- $\mu_Y^i$ et $\sigma_Y^i$ sont, respectivement, la moyenne et l'écart-type du signal $Y_i$.

La corrélation $r_j^i$ indique la dépendance entre le signal électrophysiologique $s_i$ (t), dans sa j-ème bande spectrale, et l'intention de l'individu d'actionner le i-ème degré de liberté de la machine M. En pratique, comme $r_j^i$ peut prendre des valeurs aussi bien positives que négatives, on considère plutôt son carré $(r_j^i)^2$.

Les Q (avec Q<P) bandes spectrales du signal $s_i$ (t) pour lesquelles le coefficient de corrélation au carré $(r_j^i)^2$ est le plus élevé, ou dépasse un certain seuil, sont considérées comme étant adaptées à la commande du i-ème degré de liberté de la machine. Généralement, Q est compris entre 1 et 5.

Ensuite, le signal de sortie $S_c^i$, destiné à la commande du i-ème degré de liberté de la machine est déterminé en fonction des caractéristiques $\hat{S}_i$ (fq) présentant des niveaux de corrélation les plus significatifs., selon des méthodes connues de l'homme du métier, et décrites dans les publications citées précédemment, ainsi que dans les documents :

- D. J. Mc Farland et J. R. Wolpaw « Sensorimotor Rhythm-Based Brain Computer Interface (BCI) : Feature Selection by Regression Improves Performance », IEEE transactions on neural systems and rehabilitation engineering, Vol 13, sept. 2005, 372 - 379 ; et
- P. Shenoy, et al. « Generalized features for elecrtocorticographic BCIs", IEEE transactions on biomedical engineering, Vol. 55, n. 1, janvier 2008, 273 - 280.

Par exemple, $S^i_c$ peut résulter d'une somme pondérée desdites caractéristiques du signal électrophysiologique mesuré : $S^i_c = \sum_{q=1}^{Q} a_q \cdot \hat{S}_i\left(f_q\right)$, où $a_q$ sont des paramètres à déterminer, par exemple par régression linéaire.

Des algorithmes de classification peuvent également être utilisés, qui permettent de déterminer un ensemble de caractéristiques $\hat{S}_i$ (fq), dont la combinaison génère la commande de l'effecteur i. Voir par exemple les articles précités de C. M. Chin et P. Shenoy.

Après cette étape préliminaire, au cours de laquelle le système apprend à décoder les signaux générés par le cortex du sujet, il est nécessaire de prévoir une deuxième étape d'apprentissage, dans laquelle le sujet apprend à se servir du système pour commander la machine M de la manière souhaitée. En particulier, le sujet doit s'entraîner à activer des régions déterminées de son cortex cérébral pour générer des signaux déterminés, de manière volontaire et en minimisant la génération de signaux parasites qui pourraient commander la machine M d'une façon incontrôlée.

Ces opérations sont répétées en changeant à chaque fois les associations entre caractéristiques des signaux électrophysiologiques et signaux de commande jusqu'à ce qu'un nombre suffisant desdites associations ait été validé, afin de permettre la commande d'un nombre correspondant de degrés de liberté de la machine M (généralement au moins 2 ou 3, de préférence 5 ou plus, voire 10 ou plus).

Selon un deuxième mode de réalisation de l'invention, l'étape préliminaire d'identification des signaux de commande peut être omise. Dans ce mode de réalisation de l'invention, des caractéristiques (amplitudes ou puissance dans une ou plusieurs bandes fréquentielles), et des régions corticales sont associées de manière arbitraire à la commande d'un degré de liberté de la machine. On comprend que la phase d'apprentissage par le sujet peut être sensiblement plus longue et plus délicate que dans le cas du premier mode de réalisation.

**Revendications**

1. Procédé de commande d'une machine par des signaux corticaux, comprenant les étapes consistant à :

- acquérir une pluralité de signaux électrophysiologiques issus de différentes localisations du cortex du cerveau d'un sujet humain ou animal ;
- détecter des variations prédéterminées de certaines caractéristiques desdits signaux électrophysiologiques ; et
- en réponse auxdites variations, générer des signaux de commande de ladite machine ;
**caractérisé en ce qu'**au moins certaines desdites variations prédéterminées de caractéristiques des signaux électrophysiologiques sont issus de régions du cortex déterminées a priori, sans être associées à des actions effectuées ou imaginées, ni à des stimuli sensoriels évoqués par ledit sujet humain ou animal.

2. Procédé selon la revendication 1, comprenant également une étape préliminaire d'entraînement dudit individu, comportant les sous-étapes consistant à :

- choisir une ou plusieurs localisations du cortex et les associer, provisoirement, de manière arbitraire, à un signal de commande de ladite machine ;
- entraîner le cerveau dudit sujet à activer volontairement lesdites régions du cortex pour provoquer des variations de caractéristiques des signaux électrophysiologiques issus de ces dernières, de manière à commander ladite machine d'une manière souhaitée ;
- en fonction de l'échec ou du succès de cet entraînement, valider ou refuser l'association provisoire entre variations de caractéristiques et signal de commande ;
lesdites sous-étapes étant répétées, en changeant à chaque fois les associations entre régions du cortex et signaux de commande jusqu'à ce qu'un nombre suffisant desdites associations ait été validé.

3. Procédé selon la revendication 2, dans lequel ladite étape préliminaire d'entraînement comporte également une sous-étape consistant à entraîner le cerveau dudit sujet à provoquer des variations de caractéristiques déterminées a priori des signaux électrophysiologiques issus desdites régions du cortex ; les sous-étapes d'entraînement étant répétées en changeant à chaque fois les associations entre caractéristiques des signaux électrophysiologiques et signaux de commande jusqu'à ce qu'un nombre suffisant desdites associations ait été validé.

4. Procédé selon la revendication 2, comportant également une étape préliminaire d'identification de caractéristiques des signaux électrophysiologiques issus desdites régions corticales susceptibles d'être utilisées pour la génération desdits signaux de commande.

5. Procédé selon l'une des revendications 2 à 4 dans lequel, lors de ladite étape d'entraînement, une information de retour représentative des variations de caractéristiques est fournie au sujet.

6. Procédé selon la revendication 5 dans lequel ladite information de retour comporte au moins une information parmi :

   - une information indirecte, indicative du signal de commande reçu par la machine ; et
   - une information directe, indicative des caractéristiques des signaux électrophysiologiques utilisées pour la commande.

7. Procédé selon l'une des revendications 1 à 6, dans lequel lesdits signaux électrophysiologiques sont choisis parmi :

   - des signaux électrocorticographiques, acquis via un réseau d'électrodes implantées ; et
   - des signaux électroencéphalographiques, acquis via un réseau d'électrodes placées sur le scalp du sujet.

**Patentansprüche**

1. Verfahren zur Steuerung einer Maschine durch Hirnrindensignale, welches die folgende Schritte umfasst:

   - Erfassen mehrerer elektrophysiologischer Signale, die aus verschiedenen Stellen der Hirnrinde des Gehirns eines menschlichen oder tierischen Individuums stammen;
   - Detektieren zuvor festgelegter Veränderungen bei bestimmten Eigenschaftsmerkmalen der elektrophysiologischen Signale; und
   - als Antwort auf die Veränderungen, Erzeugen von Signalen zur Steuerung der Maschine;
   **dadurch gekennzeichnet, dass** mindestens einige der zuvor festgelegten Veränderungen bei Eigenschaftsmerkmalen der elektrophysiologischen Signale aus im Vorfeld festgelegten Bereichen der Hirnrinde stammen, wobei sie jedoch weder mit durchgeführten oder vorgestellten Tätigkeiten noch mit sensorischen Reizen, welche das menschliche oder tierische Individuum erlebt hat, in Verbindung stehen.

2. Verfahren nach Anspruch 1, das weiterhin einen vorgeschalteten Schritt des Trainierens des Individuums umfasst, welcher die folgenden Unterschritte umfasst:

   - Auswählen einer oder mehrerer Stellen der Hirnrinde, um diese auf vorläufige und willkürliche Weise mit einem Signal zur Steuerung der Maschine in Verbindung zu bringen;
   - Trainieren des Gehirns des Individuums dahingehend, dass diese Bereiche der Hirnrinde bewusst aktiviert werden, um Veränderungen bei Eigenschaftsmerkmalen der elektrophysiologischen Signale zu bewirken, welche aus diesen stammen, sodass die Maschine auf eine angestrebte Weise gesteuert wird;
   - in Abhängigkeit davon, ob dieses Training fehlschlägt oder erfolgreich ist, Bestätigen oder Ablehnen der vorläufigen Verbindung zwischen den Veränderungen bei Eigenschaftsmerkmalen und dem Steuersignal;
   wobei die Unterschritte jeweils unter Änderung der Verbindungen zwischen Bereichen der Hirnrinde und Steuersignalen solange wiederholt werden, bis eine ausreichende Anzahl dieser Verbindungen bestätigt wurde.

3. Verfahren nach Anspruch 2, wobei der vorgeschaltete Trainingsschritt weiterhin einen Unterschritt aufweist, der darin besteht, das Gehirn des Individuums dahingehend zu trainieren, dass es Veränderungen bei im Vorfeld festgelegten Eigenschaftsmerkmale der elektrophysiologischen Signale bewirkt, die aus den Bereichen der Hirnrinde stammen; wobei die Trainings-Unterschritte jeweils unter Änderung der Verbindungen zwischen Eigenschaftsmerkmalen der elektrophysiologischen Signale und Steuersignalen solange wiederholt werden, bis eine ausreichende Anzahl dieser Verbindungen bestätigt wurde.

4. Verfahren nach Anspruch 2, welches weiterhin einen vorgeschalteten Schritt der Identifizierung von Eigenschaftsmerkmalen der elektrophysiologischen Signale aufweist, die aus den Hirnrindenregionen stammen, welche zur Erzeugung der Steuersignale verwendet werden können.

5. Verfahren nach einem der Ansprüche 2 bis 4, wobei dem Individuum, während des Trainingsschritts, eine Rückmeldungsinformation bereitgestellt wird, welche die Veränderungen bei Eigenschaftsmerkmalen wiedergibt.

6. Verfahren nach Anspruch 5, wobei die Rückmeldungsinformation mindestens eine der folgenden Informationen aufweist:

- eine indirekte Information, die auf das Steuersignal hinweist, welches von der Maschine empfangen wird; und
- eine direkte Information, die auf die Eigenschaftsmerkmale der elektrophysiologischen Signale hinweist, welche für die Steuerung verwendet werden.

7. Verfahren nach einem der Ansprüche 1 bis 6, wobei die elektrophysiologischen Signale aus den folgenden ausgewählt sind:

- elektrokortikographischen Signale, die über ein Netzwerk implantierter Elektroden erfasst werden; und
- elektroenzephalographischen Signalen, die über ein Netzwerk von Elektroden erfasst werden, welche auf der Kopfschwarte des Individuums angeordnet sind.

**Claims**

1. Method for controlling a machine by cortical signals, comprising the steps consisting in:

- acquiring a plurality of electrophysiological signals from different locations of the cortex of the brain of a human or animal subject;
- detecting predetermined variations of characteristics of said electrophysiological signals; and
- in response to said variations, generating control signals for said machine;
**characterized in that** at least some of said predetermined variations of characteristics of the electrophysiological signals are from a priori determined regions of the cortex, without being associated with actions performed or imagined, or with sensory stimuli evoked by said human or animal subject.

2. Method according to Claim 1, also comprising a preliminary step of driving of said subject, comprising the substeps consisting in:

- choosing one or more locations of the cortex and associating them, temporarily and arbitrarily, with a control signal for said machine;
- driving the brain of said subject to deliberately activate said regions of the cortex to provoke variations of characteristics of the electrophysiological signals from the latter, so as to control said machine in a desired manner;
- depending on the failure or the success of this driving, validating or rejecting the temporary association between variations of characteristics and control signals; said substeps being repeated, by each time changing the associations between regions of the cortex and control signals until a sufficient number of said associations has been validated.

3. Method according to Claim 2, in which said preliminary driving step also comprises a substep consisting in driving the brain of said subject to provoke variations of a priori determined characteristics of the electrophysiological signals from said regions of the cortex; the driving substeps being repeated by each time changing the associations between characteristics of the electrophysiological signals and control signals until a sufficient number of said associations has been validated.

4. Method according to Claim 2, also comprising a preliminary step of identification of characteristics of the electrophysiological signals from said cortical regions likely to be used for the generation of said control signals.

5. Method according to one of Claims 2 to 4 in which, in said driving step, return information representative of the variations of characteristics is supplied to the subject.

6. Method according to Claim 5, in which said return information comprises at least one information item out of:

- an indirect information item, indicative of the control signal received by the machine; and
- a direct information item, indicative of the characteristics of the electrophysiological signals used for the control.

7. Method according to one of Claims 1 to 6, in which said electrophysiological signals are chosen from:

- electrocorticographic signals, acquired via a network of implanted electrodes; and
- electroencephalographic signals, acquired via a network of electrodes placed on the scalp of the subject.

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040267320 A1

**Littérature non-brevet citée dans la description**

- **LEIGH R. HOCHBERG et al.** Neuronal ensemble control of prosthetic devices by a human with tetraplegia. *Nature,* 13 Juillet 2006, vol. 442, 164-171
- **FELTON E. A. ; WILSON J. A. ; WILLIAMS J. C. ; GARELL P. C.** Electrocorticographically controlled brain-computer interfaces using motor and sensory imagery in patients with temporary subdural electrode implants. Report of four cases. *J. Neurosurg.,* 2006, vol. 106, 495-500
- **SCHALK G. ; KUBANEK J. ; MILLER K. J. ; ANDERSON N. R. ; LEUTHARDT E. C. ; OJEMANN J. G. ; LIMBRICK D. ; MORAN D. W. ; GERHARDT L. A. ; WOLPAW J. R.** Decoding two-dimensional movement trajectories using electrocorticographic signals in humans. *J. Neural. Eng.,* 2007, vol. 4, 264-75
- **C. M. CHIN et al.** Identification of arm movements using correlation of electrocorticographic spectral components and kinematic recordings. *J. Neural Eng.,* 2007, vol. 4, 146-158

- **O. BILLOINT ; J. P. ROSTAING ; G. CHARVET ; B. YVERT.** A 64-Channel ASIC for In-Vitro Simultaneous Recording and Stimulation of Neurons using Microelectrode Arrays. *EMBS 2007, IEEE 29th Annual International Conference of the Engineering in Medicine and Biology Society,* 2007
- **G. SCHALK et al.** Two dimensional movement control using electrocorticographic signals in humans. *J. of Neural Engineering,* 2008, vol. 5, 75-84
- **D. J. MC FARLAND ; J. R. WOLPAW.** Sensorimotor Rhythm-Based Brain Computer Interface (BCI) : Feature Selection by Regression Improves Performance. *IEEE transactions on neural systems and rehabilitation engineering,* 13 Septembre 2005, 372-379
- **P. SHENOY et al.** Generalized features for elecrtocorticographic BCIs. *IEEE transactions on biomedical engineering,* Janvier 2008, vol. 55 (1), 273-280